# EUROPEAN PATENT APPLICATION

(11) **EP 4 141 728 A1**
(43) Date of publication of application: **01.03.2023**
(21) Application number: 22192332.9
(22) Date of filing: 26.08.2022
(51) Int. Cl.: G06F 30/17, G05B 19/4097, G05B 19/4103

(54) **CURVE FITTING METHOD, APPARATUS AND DEVICE BASED ON A DRAWING TOOL**

(30) Priority: 27.08.2021 CN 202110996006
(71) Applicant: Citic Dicastal Co., Ltd., Quinhuangdao Heibei 066011 (CN)
(72) Inventor: XU, Zuo, Qinhuangdao city, 066011 (CN); TIAN, Tao, Qinhuangdao city, 066011 (CN); WANG, Ning, Qinhuangdao city, 066011 (CN); HUANG, Shaobing, Qinhuangdao city, 066011 (CN); CHEN, Lihua, Qinhuangdao city, 066011 (CN)
(74) Representative: Kluin Patent

(57) **Abstract**

The application provides a curve fitting method, apparatus and device based on a drawing tool, which relates to the technical field of mechanical processing, and is used to improve the accuracy of curve fitting. The method includes: determining a fitting area containing the original curve, in the fitting area, performing at least one sub-fitting operation on the original curve until the end condition of the curve fitting is satisfied, and generating a fitting curve corresponding to the original curve based on the fitting curve corresponding to each sub-fitting operation. This method can fit the original curve segments in the fitting area, which improves the accuracy of the obtained fitting curve.

## Description

### Technical field of the invention

This application relates to the technical field of mechanical processing, and in particular to a curve fitting method, apparatus and device based on a drawing tool.

### Background of the invention

In the CNC machining process, it is usually necessary to fit the first-order continuous curve with arcs and straight lines to facilitate processing; however, as the first-order continuous curve in engineering usually needs to be composed of multiple splines, it is relatively complex, difficult to express and fit with mathematical formulas, and cannot be directly used for processing. In related technical fields, technicians usually manually fit first-order continuous curves. However, due to the large number and types of splines that need to be fitted, the manual curve fitting has low efficiency, large errors and low accuracy.

### Summary of the invention

The embodiments of the application provide a curve fitting method, device, and memory based on a drawing tool, to improve the efficiency and accuracy of curve fitting.

According to a first aspect of the application, it provides a curve fitting method based on a drawing tool, including:
determining a fitting area based on the original curve, the fitting area being an area containing the original curve;
performing at least one sub-fitting operation on the original curve in the fitting area until the end condition of the curve fitting is satisfied; wherein the i-th sub-fitting operation of the at least one sub-fitting operation includes: generating the fitting arc corresponding to the i-th sub-fitting operation in the fitting area based on the first tangent arc that is tangent to the original curve and passes through the arc starting point corresponding to the i-th sub-fitting operation, where i is an integer greater than 0;
generating a fitting curve corresponding to the original curve based on the fitting arc corresponding to each sub-fitting operation in at least one sub-fitting operation .

According to a second aspect of the application, it provides a curve fitting apparatus based on a drawing tool, including:
a fitting area determining unit, configured to determine a fitting area based on an original curve, the fitting area being an area containing the original curve;
the first fitting unit, configured to perform at least one sub-fitting operation on the original curve in the fitting area until the end condition of the curve fitting is satisfied; wherein, the i-th sub-fitting operation of the at least one sub-fitting operation includes: generating the fitting arc corresponding to the i-th sub-fitting operation in the fitting area based on a first tangent arc that is tangent to the original curve, and passes through the arc starting point corresponding to the i-th sub-fitting operation, where i is an integer greater than 0;
the second fitting unit, configured to generate a fitting curve corresponding to the original curve based on the fitting arc corresponding to each sub-fitting operation in at least one sub-fitting operation.

According a third aspect of the application, a computer device is provided, including a memory, a processor, and a computer program stored on the memory and running on the processor, and the processor implements the method described in the first aspect when the program is executed by the processor.

According to a fourth aspect of the application, a computer-readable memory is provided, the computer-readable memory stores computer instructions, and when the computer instructions are executed on a computer, the computer executes the method described in the first aspect.

Since the embodiments of this application adopt the above technical solutions, they have at least the following technical effects:
In the embodiments of the application, on the one hand, the original curve is automatically fitted, which can improve the efficiency of curve fitting; on the other hand, the original curve is fitted in sections in the fitting area, which improves the accuracy of the obtained fitting curve.

### Brief description of the drawings

FIG. 1 is a flowchart of a curve fitting method based on a drawing tool provided by an embodiment of the application;
FIG. 2 is a schematic diagram of two boundary lines set for an original curve provided by an embodiment of the application;
FIG. 3 is an schematic diagram of taking the starting point of the original curve as the starting point of the first sub-fitting operation provided by an embodiment of the application;
FIG. 4 is a flowchart of the i-th sub-fitting operation provided by an embodiment of the application;
FIG. 5 is a schematic diagram of a first tangent arc provided by an embodiment of this application;
FIG. 6 is a schematic diagram of a first tangency point provided by an embodiment of the application;
FIG. 7 is a schematic diagram of a test end point and a second tangent arc provided by an embodiment of the application;
FIG. 8 is a schematic diagram of cutting a first tangent arc based on the arc end point according to an embodiment of the application;
FIG. 9 is a schematic diagram of a first segment of the fitting arc and a second segment of the fitting arc provided by an embodiment of this application;
FIG. 10 is a schematic diagram of a fitting curve provided by an embodiment of the application;
FIG. 11 is a schematic diagram of curve fitting provided by an embodiment of the application;
FIG. 12 is a structural diagram of a curve fitting device based on a drawing tool provided by an embodiment of the application;
FIG. 13 is a structural diagram of a computer device provided by an embodiment of the application.

### Description of the embodiments

In order to better understand the technical solutions provided by the embodiments of the application, detailed descriptions will be described below in conjunction with the accompanying drawings of the description and specific embodiments;

In order to facilitate those skilled in the art to better understand the technical solutions of the application, the technical terms involved in the application will be described below.

Drawing tools: The drawing tools in the embodiments of this application can include, but not limited to, all kinds of software for drawing two-dimensional or three-dimensional graphics, such as Photoshop, Computer Aided Design (CAD), AutoCAD, 3DMAX, etc. The embodiments of this application do not limit the specific types of the drawing software. In the following description, only CAD is used as an example of a drawing tool for illustration. Those skilled in the art can apply the curve fitting method provided by the embodiments of this application to the drawing tool according to actual needs.

Original curve: a curve that requires curve fitting; the specific type and trend of the original curve are not limited in the embodiments of this application. Part of the following description only uses the first-order continuous curve in CAD as an example of the original curve for illustration etc., those skilled in the art can set the original curve according to actual needs.

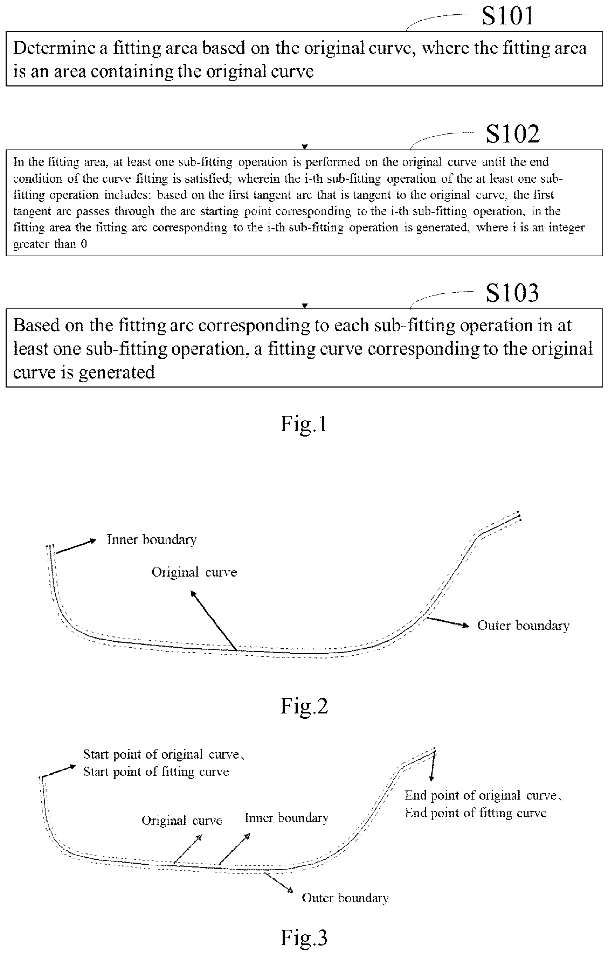

The following is a detailed description of the curve fitting method based on the drawing tool provided in the embodiment of the application, referring to FIG. 1, which specifically includes the following steps:
Step S101, determine a fitting area based on the original curve, the fitting area being an area containing the original curve.

It should be noted that the above-mentioned fitting area is used to constrain the fitting curve obtained by fitting the original curve, and those skilled in the art can set the method of determining the fitting area according to actual needs; in the embodiments of this application, it can, but not limited to, generate two boundary lines whose distance from the original curve above mentioned is less than the corresponding distance threshold on both sides of the original curve; and determine the area surrounded by the two boundary lines as the fitting area.

Further, in order to improve the accuracy of curve fitting, the trend of each of the two boundary lines can be consistent with the trend of the original curve. The deviation degree between the trend of each of the two boundary lines and the trend of the original curve can also be less than a certain deviation degree threshold.

Furthermore, in order to improve the accuracy and flexibility of curve fitting, a corresponding distance threshold may be set for each boundary line in the embodiment of the application. As shown in Fig. 2, the above two boundary lines are respectively marked as the first boundary line (that is, the inner boundary in Fig. 1) and a second boundary line (that is, the outer boundary in Fig. 2), the corresponding first distance threshold can be set for the first boundary line, and the second distance threshold can be set for the second boundary line, wherein the first distance threshold and the second distance threshold can be the same or different. Those skilled in the art can set the above-mentioned first distance threshold and the second distance threshold according to the required accuracy. For example, both the above-mentioned first distance threshold and the second distance threshold are set, but not limited to, 0.005 mm (millimeters), 0.01 mm (millimeters), 0.02 millimeters, and so on.

In the above process, the above two boundary lines can be generated based on the original curve by means of three-dimensional surface offset; one can also directly copy the original curve to obtain the copied curve, and move the copied curve to both sides of the original curve to generate the above two boundary lines; the specific method for generating the above two boundary lines is not limited too much in the embodiment of the application, and those skilled in the art can set it according to actual needs.

Step S102, in the above-mentioned fitting area, perform at least one sub-fitting operation on the original curve until the end condition of the curve fitting is satisfied; wherein, the i-th sub-fitting operation of the at least one sub-fitting operation includes: generating the fitting arc corresponding to the i-th sub-fitting operation in the above-mentioned fitting area based on the first tangent arc that is tangent to the original curve passing through the starting point corresponding to the i-th sub-fitting operation, and the above i is an integer greater than 0 .

As an embodiment, please refer to Fig. 3, in the embodiment of the application, the starting point of the original curve is used as the starting point of the first sub-fitting operation, and the ending point of the original curve is determined as the ending point of the finally obtained fitting curve; the end condition of the curve fitting may be that the distance between the current arc end point and the original curve end point satisfies the third distance threshold, and the current arc end point is the end point of the fitting arc corresponding to the last sub-fitting operation in the at least one sub-fitting operation;

That is, in the i-th sub-fitting operation, if the obtained arc end point corresponding to the i-th sub-fitting operation reaches the end of the original curve, it is considered that the end condition of the curve fitting is satisfied, meaning that it has been fitted to the end point of the original curve; wherein, the above-mentioned third distance threshold is not limited in the embodiments of this application, and those skilled in the art can set according to actual needs, such as, but not limited to, setting the above-mentioned third distance threshold to 0, 0.01mm or 0.1mm, and so on.

As an embodiment, in the embodiment of the application, only one sub-fitting operation may be performed when the end condition of the curve fitting is met, then the above at least one sub-fitting operation includes one sub-fitting operation, and when i is equal to 1, the above starting point of the arc corresponding to the first sub-fitting operation is the starting point of the above-mentioned original curve.

Step S103, generating a fitting curve corresponding to the above-mentioned original curve based on the fitting arc corresponding to each sub-fitting operation in the that least one sub-fitting operation.

As an embodiment, in the embodiment of the application, the fitting arcs corresponding to the above-mentioned sub-fitting operations can be spliced according to the generation order of the fitting arcs corresponding to the above-mentioned sub-fitting operations, to obtain the fitting curve corresponding to the above-mentioned original curve; that is, if five sub-fitting operations are performed in the above step S102, the first segment of the fitting arc, the second segment of the fitting arc, and the third segment of the fitting arc are generated in sequence according to the generation order of the fitting arc, then the splicing results of the first segment of the fitting arc, the second segment of the fitting arc, and the third segment of the fitting arc can be directly determined as the fitting curve corresponding to the above-mentioned original curve.

The following description of the embodiment of the application further explains the i-th sub-fitting operation in at least one sub-fitting operation in step S102:
In the embodiment of the application, multiple sub-fitting operations may be performed when the end condition of the curve fitting is met, then the at least one sub-fitting operation includes at least two sub-fitting operations. When i is equal to 1, the starting point of the arc corresponding to the first sub-fitting operation is the starting point of the original curve; when i is greater than 1, the starting point of the arc corresponding to the i-th sub-fitting operation is the end point of the fitting arc corresponding to the i-1th sub-fitting operation.

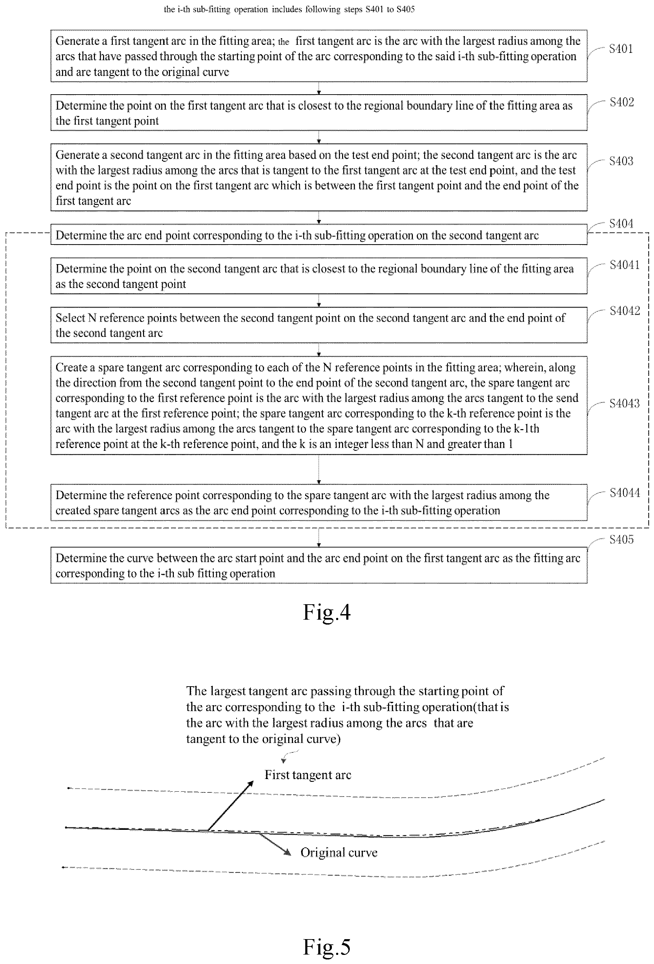

Referring to Fig. 4, the i-th sub-fitting operation includes the following steps S401 to S405:
S401: Generate a first tangent arc in the fitting area; the first tangent arc is the arc with the largest radius among the arcs that have passed through the starting point of the arc corresponding to the i-th sub-fitting operation and are tangent to the original curve.

Please refer to Fig. 5, which shows a schematic diagram of the first tangent arc, where Fig. 5 is an enlarged diagram.

S402: Determine the point on the first tangent arc that is closest to the regional boundary line of the fitting area as the first tangent point.

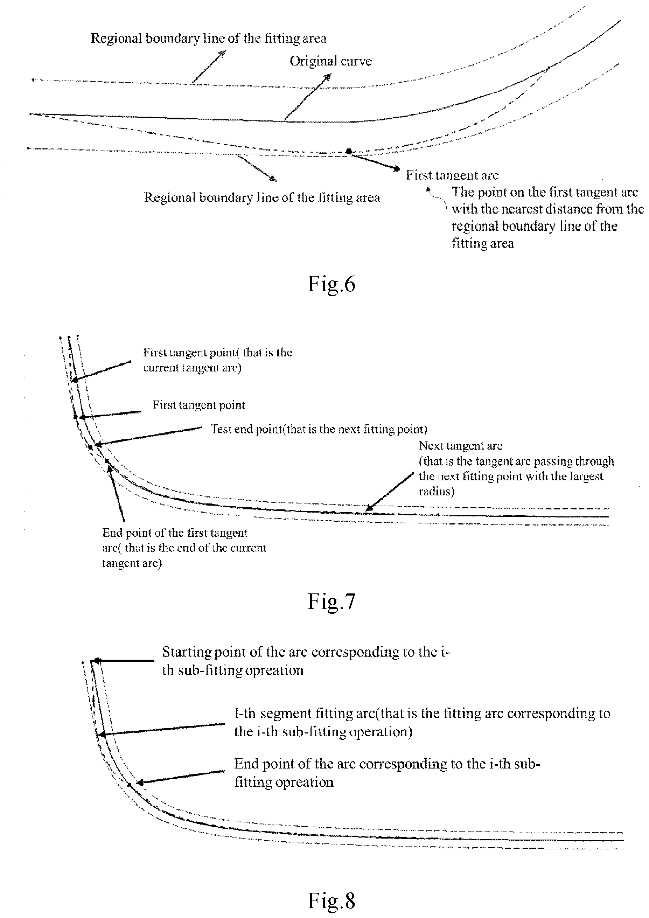

Please refer to Fig. 6, which shows a schematic diagram of the first tangent point, in which Fig. 6 is an enlarged diagram.

S403: Generate a second tangent arc in the fitting area based on the test end point; the second tangent arc is the arc with the largest radius among the arcs that is tangent to the first tangent arc at the test end point, and the test end point is the point on the first tangent arc which is between the first tangent point and the end point of the first tangent arc.

As an embodiment, a point between the first tangent point on the first tangent arc and the end point of the first tangent arc can be randomly or arbitrarily selected as the test end point, or a point at the designated position on the above-mentioned first tangent arc between the first tangent point and the end point of the first tangent arc is determined as the above-mentioned test end point; the above-mentioned designated position is not limited, and those skilled in the art can set it according to actual needs. The intermediate position or 1/3 position or 2/3 position between the first tangent point and the end point of the first tangent arc on the first tangent arc is determined as the above-mentioned designated position.

Please refer to Fig. 7, which shows a schematic diagram of the test end point and the second tangent arc.
S404: Determine the arc end point corresponding to the i-th sub-fitting operation on the second tangent arc;
As an embodiment, this step S404 may include, but not limited to, the following steps S4041
S4041: Determine the point on the second tangent arc that is closest to the regional boundary line of the fitting area as the second tangent point.

S4042: Select N reference points between the second tangent point on the second tangent arc and the end point of the second tangent arc.

As an embodiment, in step S4043, according to a method of equal proportions, N reference points are selected between the above-mentioned second tangent point on the second tangent arc and the end point of the second tangent arc;

As an embodiment, it is also possible to randomly select N reference points between the above-mentioned second tangent point on the second tangent arc and the end point of the second tangent arc.

S4043. Create a spare tangent arc corresponding to each of the N reference points in the fitting area; wherein, along the direction from the second tangent point to the end point of the second tangent arc, the spare tangent arc corresponding to the first reference point is the arc with the largest radius among the arcs tangent to the send tangent arc at the above-mentioned reference point. The spare tangent arc corresponding to the k-th reference point is the arc with the largest radius among the arcs tangent to the spare tangent arc corresponding to the k-1th reference point at the k-th reference point, and the above k is an integer less than N and greater than 1.

S4044: Determine the reference point corresponding to the spare tangent arc with the largest radius among the created spare tangent arcs as the arc end point corresponding to the i-th sub-fitting operation.

S405: Determine the curve between the arc start point and the arc end point on the first tangent arc as the fitting arc corresponding to the i-th sub fitting operation.

Specifically, referring to Fig. 8, the first tangent arc can be cut at the arc end point, and the first tangent arc between the arc start point and the arc end point is determined as the fitting arc corresponding to the i-th sub-fitting operation; in the following description, the fitting arc corresponding to the i-th sub-fitting operation is called the i-th fitting arc.

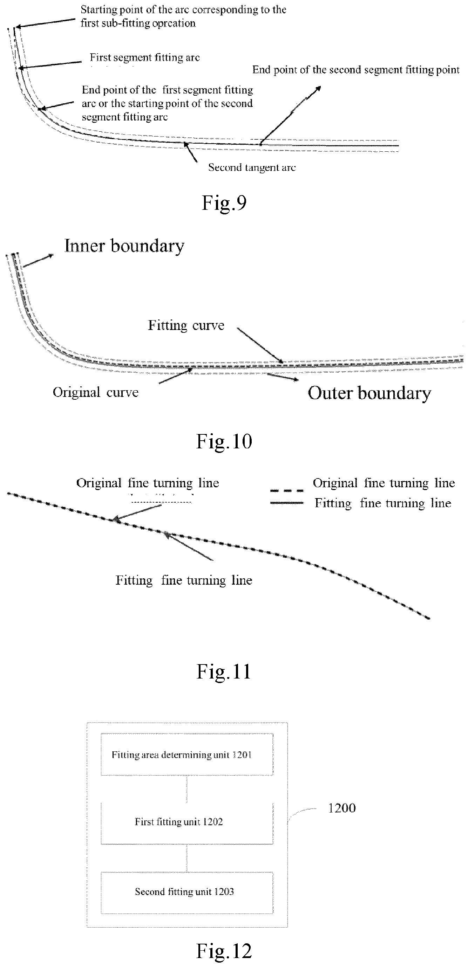

As an embodiment, please refer to Fig. 9, when i is 1, the first segment of the fitting arc can be extracted through the above steps S401 to S405, and then the first segment of the fitting arc is used as the tangent reference line, and the end point of the first segment of the fitting arc is used as the starting point of the arc corresponding to the second sub-fitting operation (that is, the starting point of the second segment of the fitting arc). Repeat the above steps S401 to S405 to obtain the second segment of the fitting arc; repeat the above steps S401 to S405 until the end condition of the curve fitting is satisfied, proceed to step S103 to obtain a fitting curve. Please refer to Fig. 10, which shows a schematic diagram of the fitting curve.

As an embodiment, in order to further facilitate the understanding of the curve fitting method based on the drawing tool provided in the embodiment of this application, CAD is used as an example of the drawing tool in the following description, and two application scenarios of the method are given:
Application scenario 1:
   When designing the hub, the back cavity surface is usually designed by using splines in the sketch, and the sketch is rotated into a curved surface. Since the machine tool can only recognize straight lines and arcs, after programming this kind of curved surface cannot be processed using the machine tools. Therefore, before the hub drawing is issued, the sketch curve needs to be fitted with the above method, so that the spline (i.e. corresponding to the original curve) is fitted to a curve composed of straight lines and arcs, and the fitting curve corresponding to the spline is finally obtained, where the schematic of the fitting curve can be seen in Fig. 10 above, and the description will not be repeated here.
Application scenario 2:
   When designing the hub, it is necessary to design the hub according to the A surface model provided by the customer. This model mainly determines the style of the hub. There is a part of the fine turning surface on the A surface. This part of the surface needs to be processed milling by the machine tool in the area. Since the machine tool can only recognize straight lines and arcs, it is necessary to extract this part of the fine turning surface, and then obtain the sketch curve of the surface according to the curve surface, and finally fit the sketch curve (i.e. corresponding to the original curve above). Please refer to Fig. 11, providing a schematic diagram of the fitting curve (i.e. the fitted fine turning line shown in the figure) obtained by fitting the above sketch curve (i.e. the original fine turning line shown in the figure) as the original curve.

The original curve is fitted based on the method provided in the embodiments of the application. On the one hand, the fitting curve obtained has a high matching accuracy with the original curve; on the other hand, the generated fitting curve is guaranteed to be within an accurate range, and the number of fitting arcs is approaching the least; on the further other hand, the embodiments of the application can be implemented through rapid deployment such as program development and have high efficiency.

Referring to Fig. 12, based on the same inventive concept, an embodiment of the application provides a curve fitting apparatus 1200 based on a drawing tool, including:
The fitting area determining unit 1201 is configured to determine the fitting area based on the original curve, and the above-mentioned fitting area is an area containing the above-mentioned original curve;

The first fitting unit 1202 is configured to perform at least one sub-fitting operation on the original curve in the above-mentioned fitting area until the end condition of the curve fitting is satisfied; wherein, the i-th sub-fitting operation of the at least one sub-fitting operation includes: generating the fitting arc corresponding to the i-th sub-fitting operation in the fitting region based on the first tangent arc that passes through the arc starting point corresponding to the i-th sub-fitting operation and is tangent to the original curve, the above i is an integer greater than 0;

The second fitting unit 1203 is configured to generate a fitting curve corresponding to the above-mentioned original curve based on the fitting arc corresponding to each sub-fitting operation in at least one sub-fitting operation.

As an embodiment, the at least one sub-fitting operation includes at least two sub-fitting operations. When i is equal to 1, the starting point of the arc corresponding to the first sub-fitting operation is the starting point of the original curve; when i is greater than 1, the starting point of the arc corresponding to the i-th sub-fitting operation is the end point of the fitting arc corresponding to the i-1th sub-fitting operation; or the at least one sub-fitting operation includes one sub-fitting operation, and when i is equal to 1, the starting point of the arc corresponding to the first sub-fitting operation is the starting point of the original curve.

As an embodiment, the first fitting unit 1202 is specifically configured to perform the i-th sub-fitting operation in the following manner:
generating a first tangent arc in the fitting area; the first tangent arc is the arc with the largest radius among the arcs that have passed through the arc starting point corresponding to the i-th sub-fitting operation and tangent to the original curve;
determining the point on the first tangent arc that is closest to the regional boundary line of the fitting area as the first tangent point;
generating a second tangent arc in the fitting area based on the test end point; the second tangent arc is the arc with the largest radius among the arcs which are tangent to the first tangent arc at the test end point, and the test end point is a point on the first tangent arc between the first tangent point and the end point of the first tangent arc;
determining the arc end point corresponding to the i-th sub-fitting operation on the second tangent arc;
determining the curve between the starting point and the ending point on the first tangent arc as the fitting arc corresponding to the i-th sub-fitting operation.

As an embodiment, the first fitting unit 1202 is specifically configured to execute:
determining the point on the second tangent arc that is closest to the regional boundary line of the fitting area as the second tangent point;
selecting N reference points between the second tangent point on the second tangent arc and the end point of the second tangent arc;
creating a spare tangent arc corresponding to each of the N reference points in the fitting area; wherein, along the direction from the second tangent point to the end point of the second tangent arc, the spare tangent arc corresponding to the first reference point is the arc with the largest radius among the arcs tangent to the send tangent arc at the above-mentioned first reference point. The spare tangent arc corresponding to the k-th reference point is the arc with the largest radius among the arcs tangent to the spare tangent arc corresponding to the k-1th reference point at the k-th reference point, and the above k is an integer less than N and greater than 1;
determining the reference point corresponding to the spare tangent arc with the largest radius among the created spare tangent arcs as the arc end point corresponding to the i-th sub-fitting operation.

As an embodiment, the first fitting unit 1202 is specifically configured to execute:
according to a method of equal proportions, selecting N reference points between the above-mentioned second tangent point on the second tangent arc and the end point of the second tangent arc; or randomly selecting N reference points between the above-mentioned second tangent point on the second tangent arc and the end point of the second tangent arc.

As an embodiment, the fitting area determining unit 1201 is specifically configured to execute:
generating two boundary lines whose distance from the original curve is less than the corresponding distance threshold on both sides of the original curve; the area surrounded by the two boundary lines is determined as the fitting area.

As an embodiment, the end condition of the curve fitting includes: the distance between the end point of the current arc and the end point of the original curve is less than a third distance threshold; wherein the end point of the current arc is the end point of the fitting arc corresponding to the last sub-fitting operation in the at least one sub-fitting operation.

As an embodiment, the above-mentioned at least one sub-fitting operation includes at least two sub-fitting operations, and the second fitting unit 1203 is specifically configured to execute: splicing the fitting arcs corresponding to the above-mentioned sub-fitting operations according to the generation order of the fitting arcs corresponding to the above-mentioned sub-fitting operations, to obtain the fitting curve corresponding to the above-mentioned original curve.

As an embodiment, the device in Fig. 12 can be used to implement any of the curve fitting methods based on a drawing tool discussed above.

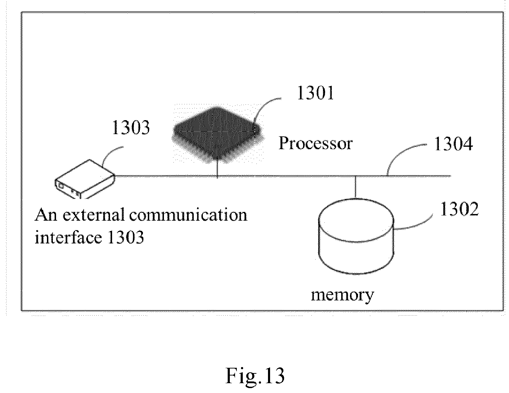

The curve fitting apparatus 1200 is an example of a hardware entity such as the computer device shown in Fig. 13. The computer device includes a processor 1301, a memory 1302, and at least one external communication interface 1303; the above-mentioned processor 1301, memory 1302, and external communication interface 1303 are all connected via the bus 1304.

A computer program is stored in the memory 1302;
when the processor 1301 executes the computer program, the position fingerprint positioning method discussed above is realized.

In Fig. 13, one processor 1301 is taken as an example, but actually, the number of processors 1301 is not limited.

The memory 1302 may be a volatile memory, such as a random-access memory (RAM); the memory 1302 may also be a non-volatile memory non-volatile memory, for example, read-only memory, flash memory, hard disk drive (HDD) or solid-state drive (SSD), or memory 1302 can be used to carry or store instructions or the desired program code in the form of a data structure and any other medium that can be accessed by a computer, but not limited to this. The memory 1302 may be a combination of the above-mentioned memory.

Based on the same technical concept, an embodiment of the application also provides a computer-readable memory that stores computer instructions. When the computer instructions run on the computer, the computer executes the position fingerprint positioning method discussed above.

## Claims

1. A curve fitting method based on a drawing tool, **characterized in that** it includes:
determining a fitting area based on the original curve, the fitting area is an area containing the original curve;
performing at least one sub-fitting operation on the original curve in the fitting area until the end condition of the curve fitting is satisfied; wherein the i-th sub-fitting operation of the at least one sub-fitting operation includes: generating the fitting arc corresponding to the i-th sub-fitting operation in the fitting area based on the first tangent arc that is tangent to the original curve, the first tangent arc passing through the arc starting point corresponding to the i-th sub-fitting operation, where i is an integer greater than 0;
generating a fitting curve corresponding to the original curve based on the fitting arc corresponding to each sub-fitting operation in at least one sub-fitting operation.

2. The method according to claim 1, **characterized in that**:
the at least one sub-fitting operation includes at least two sub-fitting operations, when i is equal to 1, the starting point of the arc corresponding to the first sub-fitting operation is the starting point of the original curve; when i is greater than 1, the starting point of the arc corresponding to the i-th sub-fitting operation is the end point of the fitting arc corresponding to the i-1th sub-fitting operation; or
the at least one sub-fitting operation includes one sub-fitting operation; when i is equal to 1, the starting point of the arc corresponding to the first sub-fitting operation is the starting point of the original curve.

3. The method according to claim 1 or 2, **characterized in that** the i-th sub-fitting operation includes:
generating a first tangent arc in the fitting area; the first tangent arc being the arc with the largest radius among the arcs that have passed through the starting point of the arc corresponding to the i-th sub-fitting operation and being tangent to the original curve;
determining the point on the first tangent arc closest to the regional boundary line of the fitting area as the first tangent point;
generating a second tangent arc in the fitting area based on the test end point; the second tangent arc being the arc with the largest radius among the arcs that is tangent to the first tangent arc at the test end point, and the test end point is the point on the first tangent arc which is between the first tangent point and the end point of the first tangent arc;
determining the arc end point corresponding to the i-th sub-fitting operation on the second tangent arc;
determining the curve between the arc start point and the arc end point on the first tangent arc as the fitting arc corresponding to the i-th sub fitting operation.

4. The method according to claim 3, **characterized in that**,
determining the arc end point corresponding to the i-th sub-fitting operation on the second tangent arc, including:
determining the point on the second tangent arc closest to the regional boundary line of the fitting area as the second tangent point;
selecting N reference points between the second tangent point on the second tangent arc and the end point of the second tangent arc;
creating a spare tangent arc corresponding to each of the N reference points in the fitting area; wherein, along the direction from the second tangent point to the end point of the second tangent arc, the spare tangent arc corresponding to the first reference point is the arc with the largest radius among the arcs tangent to the send tangent arc at the first reference point; the spare tangent arc corresponding to the k-th reference point is the arc with the largest radius among the arcs tangent to the spare tangent arc corresponding to the k-1-th reference point at the k-th reference point, and the k is an integer less than N and greater than 1;
determining the reference point corresponding to the spare tangent arc with the largest radius among the created spare tangent arcs as the arc end point corresponding to the i-th sub-fitting operation.

5. The method according to claim 4, **characterized in that**, the selecting N reference points between the second tangent point on the second tangent arc and the end point of the second tangent arc includes:
selecting N reference points between the second tangent point on the second tangent arc and the end point of the second tangent arc according to a method of equal proportions; or
randomly selecting N reference points between the second tangent point on the second tangent arc and the end point of the second tangent arc.

6. The method according to any one of claims 1 or 2, **characterized in that**, the determining the fitting area based on the original curve includes:
generating two boundary lines whose distance from the original curve is less than a corresponding distance threshold on both sides of the original curve;
determining the area surrounded by the two boundary lines as the fitting area.

7. The method according to claim 1 or 2, **characterized in that**, the end condition of the curve fitting comprises:
the distance between the current arc end point and the original curve end point less than the third distance threshold, wherein, the current arc end point is the end point of the fitting arc corresponding to the last sub-fitting operation in the at least one sub-fitting operation.

8. The method according to claim 2, **characterized in that**, the at least one sub-fitting operation comprising at least two sub-fitting operations, based on the fitting arc corresponding to each sub-fitting operation in the at least one sub-fitting operation, generating a fitting curve corresponding to the original curve, includes:
according to the generation order of the fitting arcs corresponding to the sub-fitting operations, splicing the fitting arcs corresponding to the sub-fitting operations to obtain the fitting curve corresponding to the original curve.

9. A curve fitting apparatus based on a drawing tool, **characterized by** comprising:
a fitting area determining unit, configured to determine the fitting area based on the original curve, the fitting area being an area containing the original curve;
a first fitting unit, configured to perform at least one sub-fitting operation on the original curve in the fitting area until the end condition of the curve fitting is satisfied; wherein, the i-th sub-fitting operation of the at least one sub-fitting operation includes: generating the fitting arc corresponding to the i-th sub-fitting operation in the fitting area based on the first tangent arc that passes through the arc starting point corresponding to the i-th sub-fitting operation and is tangent to the original curve, the i is an integer greater than 0;
a second fitting unit, configured to generate a fitting curve corresponding to the original curve based on the fitting arc corresponding to each sub-fitting operation in at least one sub-fitting operation.

10. A computer device, comprising a memory, a processor, and a computer program stored on the memory and running on the processor, **characterized in that** the processor implements the steps of the method according to any one of claims 1-8 when the program is executed.
